# EUROPEAN PATENT SPECIFICATION

(11) **EP 3 112 771 B1**
(45) Date of publication and mention of the grant of the patent: **28.03.2018**
(21) Application number: 16175380.1
(22) Date of filing: 21.06.2016
(51) Int. Cl.: F24F 13/00, F16K 31/52, F16K 31/524, F16H 25/14, F16K 31/04, F24F 13/14

(54) **ELECTRIC ACTUATOR FOR HEATING, VENTILATING AND AIR-CONDITIONING SYSTEM**
ELEKTRISCHER STELLANTRIEB FÜR HEIZUNGS-, LÜFTUNGS- UND KLIMAANLAGE
ACTIONNEUR ÉLECTRIQUE DE CHAUFFAGE, DE VENTILATION ET DE CLIMATISATION

(30) Priority: 30.06.2015 CN 201510374960
(43) Date of publication of application: 04.01.2017
(73) Proprietor: Siemens Schweiz AG, 8047 Zürich (CH)
(72) Inventor: Sun, Shao Long, Beijing 100076 (CN); Xiong, Hong, Beijing 100161 (CN); Li, Mi, Beijing 100107 (CN)
(74) Representative: Maier, Daniel Oliver

(56) References cited:
- EP-A1- 1 319 879
- EP-A1- 1 887 200
- WO-A1-2012/048594

## Description

### Technical Field

The present invention relates generally to the field of heating, ventilating and air conditioning (HVAC), and more particularly to an electric actuator for driving a valve to open or close.

### Background Art

An electric actuator mainly controls the rotation of a motor under the action of a controller, and drives mechanical transmission parts to output torque and/or displacement. The torque and/or displacement output by the electric actuator can be used to drive the corresponding action of other mechanical parts connected to the actuator, for example, to drive the opening and closing of a valve.

Typically, the electric actuator comprises a motor, a speed reduction mechanism/transmission mechanism, a stroke and/or torque control mechanism, etc. For the sake of safety, the electric actuator further comprises a reset mechanism, which can drive the valve connected to the electric actuator, for example, to return to a preset safety position such as a closed position when the electric actuator fails (for example, when the motor is powered off). Such a reset mechanism can effectively avoid the problems of operational faults and uncertain states of the valve caused by the sudden loss of power.

In the existing electric actuators, the reset mechanism generally uses a coil spring or a capacitor for resetting. The structure of a flat spiral spring reset mechanism is relatively complex, but the output restoring force is stable. For capacitor resetting, the monitoring of the state of an energy storage capacitor and regular maintenance are necessary.

To this end, there is a need for a simpler and easier reset mechanism in the existing electric actuators.

EP 1 319 879 A1 discloses the features according to the preamble of claim 1. In this document a direct-acting electric operated valve having a stem which reciprocates by an electric motor without using air pressure is shown, wherein as the stem vertically reciprocates, a first passage and a second passage are switched over. A cam mechanism is formed for converting rotary reciprocating motion of an eccentric cam which rotary reciprocates by an electric motor into vertical reciprocating motion. The eccentric cam is retained at an upper retaining position which is slightly exceeding a top dead center and at a lower retaining position which is slightly exceeding a bottom dead center. In a state in which an integral coil spring which is previously held between an upper spring seat and a lower spring seat in its compressed state is mounted to a spring shaft which extends from a cam mechanism, the coil spring is accommodated in a spring case connected to the stem.

EP 1 887 200 A1 discloses a valve assembly including a flow control valve. The control valve comprises a valve member disposed in a fluid passageway and configured to move between an open position and a closed position. It further comprises a valve shaft coupled to the valve member, an actuator comprising an actuator output shaft configured to rotate, and a torsion spring extending between a first end and a second end. The first end is being coupled to the actuator output shaft and the second end is being coupled to the valve shaft. The torsion spring is configured to transmit rotational movement of the actuator output shaft to the valve shaft.

### Summary of the Invention

An object of the present invention is to provide an electric actuator, in which the structure of a reset mechanism is compact. Another object of the present invention is to provide an electric actuator, in which an operating structure of the reset mechanism is simple and which is capable of providing a relatively stable output.

According to one aspect of the present invention, an electric actuator in a heating, ventilating and air conditioning system proposed in the present invention comprises: a motor; an actuation end driven by the motor, which is movable between an initial position and an actuation position; and a reset mechanism, which provides a restoring torque for driving said actuation end to return to the initial position, said reset mechanism further comprising: a torsion spring, which is capable of outputting a restoring force as a function of a torsion angle when said motor stops working; and an eccentric mechanism, which is driven to rotate by the restoring force of said torsion spring and outputs said restoring torque, wherein a center of rotation of said eccentric mechanism is arranged to deviate from a center of torsion of said torsion spring in such a way that 1) with an increase in the torsion angle, the restoring force applied to said eccentric mechanism by said torsion spring is smaller by an increased amount than a restoring force output by the torsion spring in a non-eccentric arrangement, or 2) with an increase in the torsion angle, a torque arm corresponding to the restoring force applied to said eccentric mechanism by said torsion spring becomes smaller.

The reset mechanism of the present invention uses the torsion spring, instead of a flat spiral spring, to provide resetting. Since the torsion spring does not have a requirement of a space for elastic stretching, the structure of the overall electric actuator can be made compact, and the operating structure is simple. In addition, in the reset mechanism of the present invention, when the torsion angle is large, the restoring torque output from the reset mechanism is compensated such that the restoring force for the formation of the restoring torque is smaller with respect to a non-eccentric arrangement, or such that the torque arm is reduced; and correspondingly, when the torsion angle is small, the restoring force for the formation of the restoring torque is larger with respect to the non-eccentric arrangement, or the torque arm is increased. By means of the above compensation, the reset mechanism of the present invention is also capable of outputting a substantially stable restoring torque, and therefore it is possible to make the actuation end reset smoothly.

Preferably, according to one aspect of the present invention, the electric actuator proposed in the present invention further comprises a transmission mechanism comprising: a main shaft, with one end connected to said motor and with the other end fixedly connected to the center of rotation of said eccentric mechanism; and a transmission component, which is capable of converting the rotation of said main shaft into a driving force for driving the action of said actuation end, wherein said torsion spring is sheathed on said main shaft and said eccentric mechanism abuts against said torsion spring.

As described above, when the motor is working properly, under the driving of the motor, the main shaft drives the actuation end to the actuation position via the transmission component on one hand, and rotates the eccentric mechanism on the other hand, so that the torsion spring is twisted and stores energy. When the motor stops working, the torsion spring releases the energy, and the restoring force output from the torsion spring pushes the eccentric mechanism to rotate reversely, so as to drive the main shaft 32 to rotate reversely, so that the transmission component reversely drives the actuation end to return to its initial position. The use of the electric actuator proposed in the present invention can allow for the use of one and the same transmission mechanism to achieve reversible drive for the energy storage and release of the torsion spring. Thus, the electric actuator and the operating structure proposed in the present invention are simpler and more compact.

According to one aspect of the present invention, in the electric actuator proposed in the present invention, said torsion spring has a movable leg, which protrudes in a radial direction of said torsion spring; and said eccentric mechanism comprises a rotation arm, with one end fixedly connected to said center of rotation and with the other end provided with a retaining pin, said retaining pin being connected to the movable leg of said torsion spring. Preferably, said retaining pin extends in a direction perpendicular to the plane where said rotation arm is located, and intersects with and abuts against said movable leg of the torsion spring.

With the above electric actuator proposed in the present invention, the torsion spring can act on the eccentric mechanism, and the position where the retaining pin of the rotation arm acts on the movable leg of the torsion spring changes with the torsion angle. The larger the torsion angle, the larger the distance between the position where the movable leg abuts against (makes contact with) the retaining pin of the rotation arm and the center of torsion of the torsion spring, so that the restoring force applied to the eccentric mechanism by the torsion spring is smaller with respect to the non-eccentric arrangement. On the contrary, the smaller the torsion angle, the smaller the distance between the position where the movable leg abuts against (makes contact with) the retaining pin of the rotation arm and the center of torsion of the torsion spring, so that the restoring force applied to the eccentric mechanism by the torsion spring is larger with respect to the non-eccentric arrangement. By compensating for the restoring force applied to the eccentric mechanism, the eccentrically arranged torsion spring proposed in the present invention can eventually output a substantially stable restoring torque.

According to another aspect of the present invention, in the electric actuator proposed in the present invention, said torsion spring has a movable leg, which protrudes in an axial direction of said torsion spring; and said eccentric mechanism comprises a rotation arm with one end fixedly connected to said center of rotation, said movable leg and said rotation arm abutting against each other.

With the above electric actuator proposed in the present invention, the torsion spring can act on the eccentric mechanism, and the position where the movable leg of the torsion spring acts on the rotation arm changes with the torsion angle. The larger the torsion angle, the smaller the distance between the position where the movable leg abuts against (makes contact with) the rotation arm and the center of rotation of the eccentric mechanism, that is to say, the smaller the torque arm corresponding to the restoring force of the torsion spring. On the contrary, the smaller the torsion angle, the larger the distance between the position where the movable leg abuts against (makes contact with) the rotation arm and the center of rotation of the eccentric mechanism, thus the larger the torque arm corresponding to the restoring force applied to the eccentric mechanism by the torsion spring. By compensating for the torque arm corresponding to the restoring force applied to the eccentric mechanism, the eccentrically arranged torsion spring proposed in the present invention can eventually output a substantially stable restoring torque.

Preferably, according to one embodiment of the present invention, in the electric actuator proposed in the present invention, said transmission component is an eccentric wheel arranged around said main shaft, and when said eccentric wheel rotates along with said main shaft, a rim of said eccentric wheel abuts against said actuation end. With this transmission mechanism, the eccentric wheel used as the transmission mechanism and the actuation end abut against each other without needing any connecting component, so that the structure is simpler.

Preferably, according to one embodiment of the present invention, in the electric actuator proposed in the present invention, said main shaft is fixed onto a bracket, said torsion spring is fixedly sheathed on said main shaft, and said torsion spring has a fixed leg which is able to be fixed to said bracket. Preferably, a pin hole and a stop pin, which is adapted to be inserted into the pin hole, are provided on said bracket, and the rotation of said fixed leg is limited by said stop pin. A leg of the torsion spring is limited by the stop pin, so that it is used as a fixed leg. This design allows the reset mechanism to be simpler to assemble and easy to operate.

### Description of the Drawings

The following accompanying drawings are only to illustratively describe and explain the present invention and not intended to limit the scope of the present invention.
Fig. 1 shows a perspective view of an electric actuator according to an embodiment of the present invention and a valve connected thereto.
Fig. 2 shows a sectional view along line A-A' in Fig. 1.
Figs. 3A and 3B respectively show a left side view and a front view of the electric actuator shown in Fig. 1, with its actuation end being in the initial position; and
Figs. 3C and 3D respectively show a left side view and a front view of the electric actuator shown in Fig. 1, with its actuation end being in the actuation position.
Figs. 4A and 4B respectively show a left side view and a front view of an electric actuator according to a further embodiment of the present invention, with its actuation end being in the actuation position; and
Figs. 4C and 4D respectively show a left side view and a front view of the electric actuator according to the further embodiment of the present invention, with its actuation end being in the initial position.

### Detailed Description

For better understanding of the technical features, objects and effects of the present invention, the particular embodiments of the present invention will now be described herein with reference to the accompanying drawings, and the same numerals denote the components having the same or similar structure and the same function throughout the drawings.

As used herein, the term "exemplary" means "serving as an example, instance, or description," and any "exemplary" illustration and embodiment herein should not be interpreted as a more preferred or a more advantageous technical solution.

For clarity of the drawings, only the relevant parts of the present invention are schematically shown throughout the drawings, and they do not represent the actual structure of a product. In addition, in order to make the drawing simple and easy to understand, only one of the components with the same structure or function in some of the drawings is schematically depicted, or only one of which is marked.

As used herein, "a/an" not only means "only one", but can also mean "more than one". In addition, as used herein, the terms "first" and "second" etc. are only used to distinguish one another, rather than conferring on them the degree of importance and order etc. As used herein, the terms "upper", "lower", "inner" and "outer" refer to the relative positional relationship rather than the absolute positional relationship only for convenience of description.

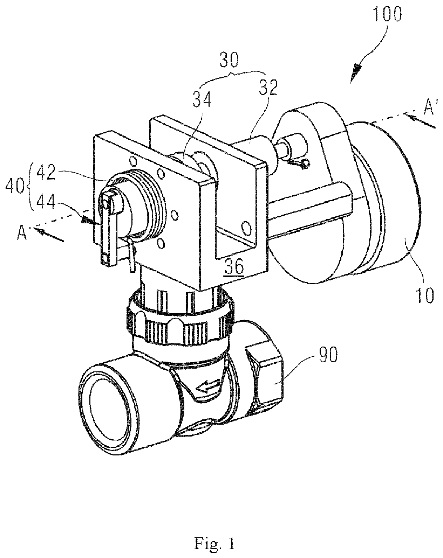

Fig. 1 exemplarily shows an electric actuator according to an embodiment of the present invention and a valve connected to the electric actuator. As shown in Fig. 1, the electric actuator 100 is connected to the valve 90, and they are assembled together to form an operable unit. The electric actuator 100 may drive the valve 90 to open or close in response to a command from a controller (not shown), so as to correspondingly pass or block the flow of a cold medium or hot medium in a pipeline where the valve 90 is located. For the sake of safety, when the electric actuator 100 is suddenly powered off, in general, it is necessary for the electric actuator to be able to return the valve 90 to a preset safe state, for example, the closed state. To this end, the electric actuator 100 is further provided with a power-off reset mechanism, referred to as a reset mechanism. The reset mechanism is capable of providing a restoring force or a restoring torque when the motor is not working, in order to drive the valve 90 to return to its safe position (for example, the closed position).

In one embodiment of the present invention, the resetting function of the reset mechanism in the electric actuator is mainly provided by at least one torsion spring, for example. The torsion spring does not need a space for elastic stretching, and therefore is smaller in terms of volume with respect to other types of springs. With respect to the flat spiral spring reset mechanism in the existing electric actuators, the operating structure of the torsion spring is also simpler. Types and forms of torsion springs are relatively abundant, and may be selected and used according to the actual design requirements. In general, the torsion spring stores energy when being twisted, and releases the energy after the externally applied torsional force disappears, that is, provides a restoring force in the direction opposite to the torsional direction. The larger the torsion angle, the larger the torque output from the torsion spring. In the energy release process, as the torsion angle is gradually decreased, the torque output from the torsion spring is correspondingly reduced. However, in the electric actuator, the reset mechanism is typically required to provide a relatively stable output. Just for this reason, in the prior art, the torsion spring is generally considered to be unable to meet the resetting requirements of the electric actuator.

The inventor suggests that: an eccentric mechanism, which is arranged to deviate from the center of torsion of the torsion spring, is used to compensate for the change in the torque output from the torsion spring itself as a function of the torsion angle. In particular, the reset mechanism in the embodiment of the present invention not only comprises a torsion spring, but also comprises an eccentric mechanism linked to the torsion spring. The torsion spring outputs the torsion spring torque (which takes the center of torsion of the torsion spring as the center) during the release of energy. The torsion spring torque is applied to an eccentric mechanism, and the center of rotation of the eccentric mechanism is arranged to deviate from the center of torsion of the torsion spring. The eccentric mechanism rotates around its center of rotation under the action of the torsion spring torque, so that the torsion spring torque is converted into a restoring torque. The restoring torque is then used to drive the actuation end to restore to its initial position. The eccentric mechanism may cooperate with the torsion spring, so as to change either the torque arm or the restoring force used to form the restoring torque, thereby compensating for the change in the torsion spring torque as a function of the torsion angle.

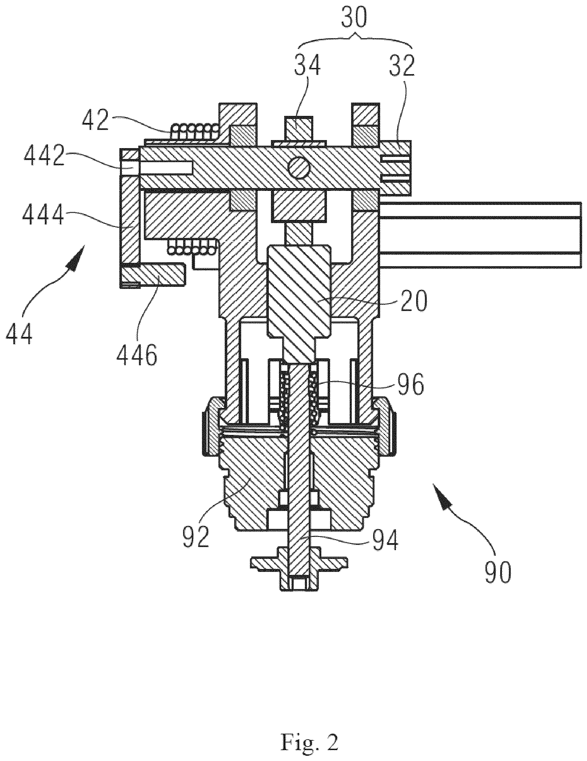

Fig. 1 shows a perspective view of an electric actuator 100 according to an embodiment of the present invention and a valve 90. Fig. 2 shows a sectional view along line A-A' in Fig. 1. For the sake of simplicity, the motor part is omitted in Fig. 2. Compositions of the reset mechanism 40 in one embodiment of the present invention will be described below with reference to Figs. 1 and 2.

As shown in Figs. 1 and 2, the electric actuator 100 and the valve 90 are connected together to form an operable unit. The electric actuator 100 includes a motor 10 and an actuation end 20 driven by the motor 10. In the example of Fig. 2, the drive mode of the actuation end 20 is a straight stroke mode, which can also adopt an angular stroke mode or the like. Preferably, a transmission mechanism 30 may be arranged between the motor 10 and the actuation end 20. The transmission mechanism 30 may include a speed change mechanism such as a gear box and/or a transmission component for completing the conversion of a rotational motion into a linear motion, for example. In the example shown in Fig. 2, the transmission mechanism 30 preferably includes a motor 32 driven by the motor and an eccentric wheel 34 sheathed on the main shaft 32. A rim of the eccentric wheel 34 abuts against the upper end of the actuation end 20 to facilitate the linear motion of the actuation end 20.

As shown in Fig. 2, the valve 90 includes, for example, a valve body (not shown) and a valve plug 92, and a valve rod 94 protruding from the interior of the valve plug 92. The valve rod 94 can move up and down, so as to mechanically open or close the valve 90. Herein, the valve 90 may adopt the structure of any of commercially available valves, without being limited to the structure shown in this figure. In the example shown in Fig. 2, preferably, the actuation end 20 in the electric actuator 100 and the upper end portion of the valve rod 94 abut against each other. Optionally, the actuation end 20 may also be connected to the valve rod 94. In the example shown in Fig. 2, preferably, the valve 90 also has a reset spring 96, which is arranged between the valve plug 92 and the upper end portion of the valve rod 94. The reset spring 96 may cause the valve rod 94 to be in a protruding position in the absence of any external force, which for example corresponds to the open position of the valve 90. The actuation end 20 can move downward under the action of the eccentric wheel 34, and push the valve rod 94 to the closed position. In this case, the actuation end is in its initial position, which corresponds to the closed position of the valve, that is the preset safe position. Under the driving of the motor 10, the main shaft 32 is rotated to drive the eccentric wheel 34 to rotate upward, weakening the pushing force on the actuation end 20. In this case, under the action of the reset spring 96, the actuation end 20 is pushed upward by the valve rod, so as to move upward along with the eccentric wheel 34 to its actuation position, that is, for example, corresponding to the open position of the valve. In this way, the eccentric wheel 34, the actuation end 20 and the valve rod 94 can abut against one another without the need of connecting components.

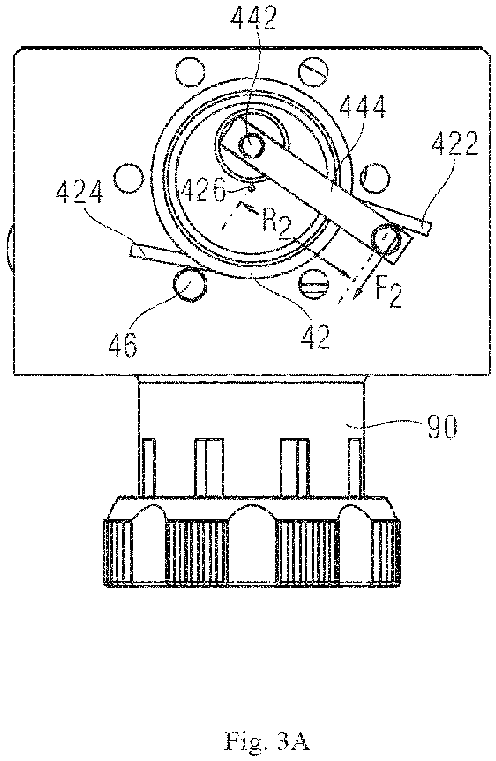

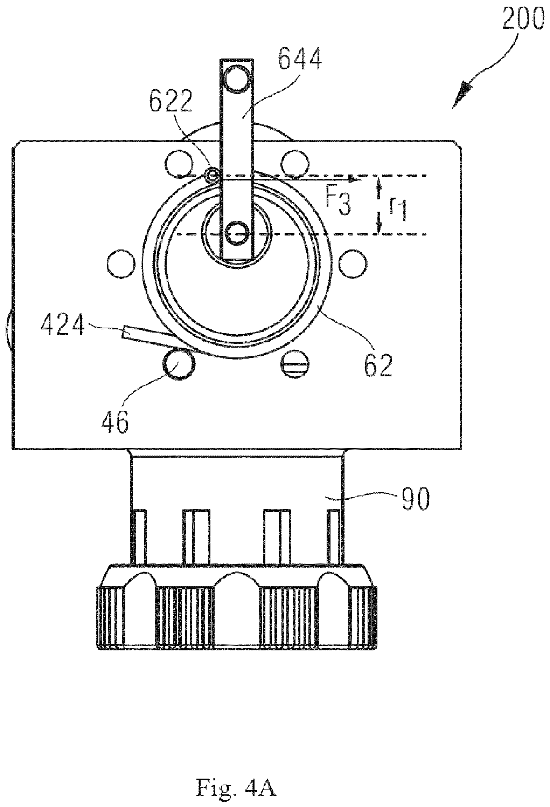

In the example shown in Figs. 1 and 2, the electric actuator 100 further includes a reset mechanism 40, which is capable of outputting a restoring torque when the motor is powered off or is not working, in order to drive the actuation end 20 to return to its initial position. In this example, the reset mechanism 40 includes, for example, a torsion spring 42 and an eccentric mechanism 44, which cooperates with the torsion spring 42 and is arranged to deviate from the center of torsion 426 of the torsion spring 42. The torsion spring 42 stores energy when being twisted, and releases the energy when the external force disappears, that is, outputs a torsion spring torque. The torsion spring torque is applied to the eccentric mechanism 44, to drive the eccentric mechanism 44 to rotate about its center of rotation (eccentricity) 442. The rotation of the eccentric mechanism 44 can output a restoring torque. In the embodiment of Figs. 3A-3D, the eccentric mechanism 44 functions to change the amount of the restoring force F for forming the restoring torque by means of the eccentric arrangement, thereby compensating for the change in the torsion spring torque as a function of the torsion angle. In the embodiment of Figs. 4A-4D, the eccentric mechanism functions to change the amount of the torque arm r for forming the restoring torque by means of the eccentric arrangement, thereby compensating for the change in the torsion spring torque as a function of the torsion angle. The principle and operation of the two embodiments will be described in detail later.

In the example of Figs. 1 and 2, preferably, when the motor 10 is working properly, the transmission mechanism 30 is not only used to transfer the output of the motor 10 to the actuation end 20, but also to simultaneously twist the torsion spring 42 in the reset mechanism 40, so that the torsion spring stores energy. When the motor 10 is powered off, the transmission mechanism 30 is no longer driven by the motor 10. In this case, torsion spring 42 in the the reset mechanism 40 releases the energy, and outputs a substantially stable restoring torque τ with the cooperation of the eccentric mechanism 44. This restoring torque τ likewise acts on the transmission mechanism 30, thereby driving the actuation end 20 to return to its initial position. Optionally, the reset mechanism 40 and the transmission mechanism 30 may also be independent of one another, and drive the actuation end in respectively different ways and structures. For example, the torsion spring 42 may be pre-biased to a energy storage state, instead of being driven by the motor 10 to its energy storage state. When the motor 10 is powered off, a switch device can be used to switch to the situation in which the actuation end is driven by the reset mechanism 40.

In the example shown in Figs. 1 and 2, preferably, the main shaft 32 further extends to the reset mechanism 40. For example, the torsion spring 42 may be sheathed on the main shaft 32, and supported by the main shaft 32. The center of torsion 426 of the torsion spring 42 is arranged to deviate from the main shaft 32, and the torsion spring 42 and the eccentric mechanism 44 are connected to each other or abut against each other. At the same time, the main shaft 32 is fixedly connected to the center of rotation 442 of the eccentric mechanism 44, that is to say, the eccentric mechanism 44 is rotated around the main shaft 32, and applies the restoring torque to the main shaft 32. Accordingly, when the motor 10 is working properly, the motor 10 drives the main shaft 32 to rotate, so as to drive the actuation end 20 to the actuation position via the eccentric wheel 34. At the same time, under the action of the motor 10, the main shaft 32 rotates the eccentric mechanism 44, and the eccentric mechanism 44 in turn causes the torsion spring 42 to be twisted and store energy. When the motor 10 stops working (powered off), the torsion spring 42 in the reset mechanism 40 releases the energy. In this case, the restoring torque output from the torsion spring 42 and the eccentric mechanism 44 as a whole acts on the main shaft 32, so that the main shaft 32 is rotated in the reverse direction, so as to push the actuation end 20 back into its initial position.

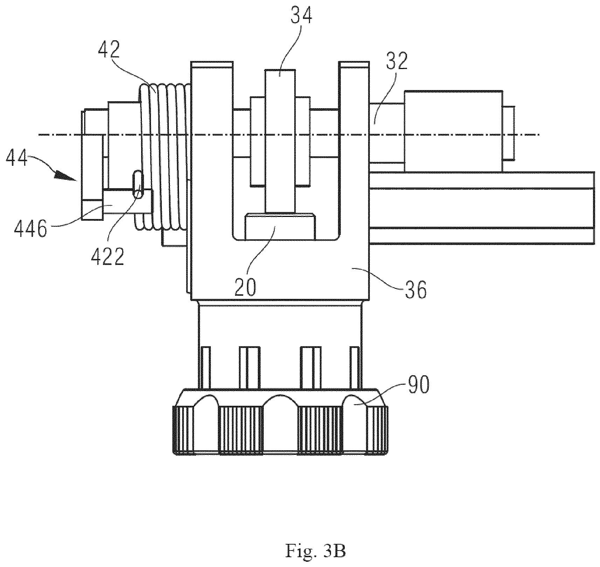

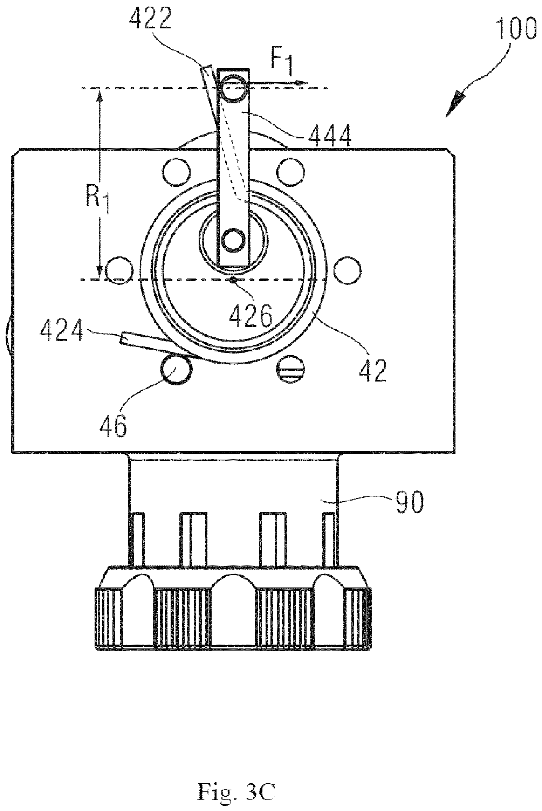

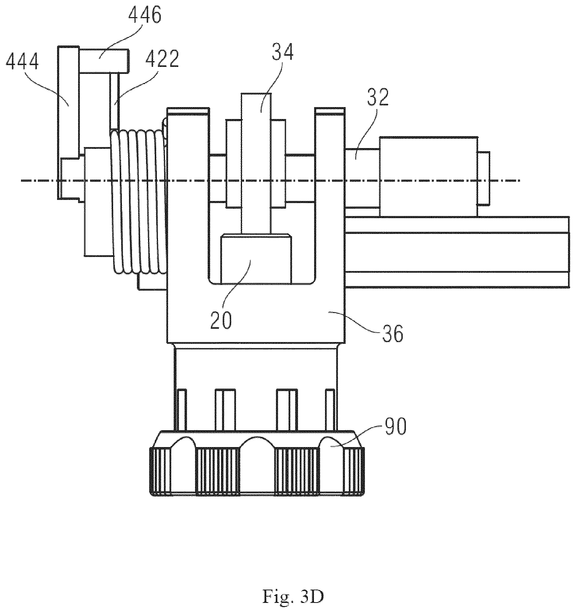

Figs. 3A-3D show a reset mechanism 40 according to one embodiment of the present invention, in which the eccentric arrangement of the eccentric mechanism 44 can change the amount of the restoring force F for forming the restoring torque τ. In particular, Figs. 3A and 3B show the situation in which the actuation end 20 is situated in the initial position. Figs. 3C and 3D show the situation in which the actuation end 20 is situated in the actuation position.

As in Figs. 3A-3D, in this embodiment, the torsion spring 42 is sheathed on the main shaft 32, and the center of torsion 426 thereof is arranged to deviate from the main shaft 32. Preferably, the torsion spring 42 have two radial legs, namely a movable leg 422 and a fixed leg 424, both of which protrude along the radial direction of the torsion spring 42. The fixed leg 424 remains in the same position during the twisting of the torsion spring 42. In Fig. 3A, a stop pin 46 may be inserted into a pin hole on a bracket 36 for the main shaft, and the rotation stop pin 46 can limit the rotation of the fixed leg 424. The movable leg 422 can be rotated around the center of torsion 426 under the action of an external force. The larger the torsion angle between the fixed leg and the movable leg, the greater the stored energy of the torsion spring. In Fig. 3A-3D, the eccentric mechanism 44 comprises a rotation arm 444 with one end fixedly connected to the main shaft 32, i.e., the center of rotation 442 thereof is fixed to the main shaft 32. Thus, the rotation of the main shaft 32 can drive the rotation arm 444 to rotate, and when rotating due to an external force, the rotation arm 444 can also drive the main shaft 32 to rotate. The rotation arm 444 is provided with a retaining pin 446 at its distal end far away from the main shaft 32, the retaining pin and the movable leg 422 of the torsion spring 42 abutting against each other. Preferably, the retaining pin 446 can protrude in a direction perpendicular to the plane where the rotation arm 444 is located.

When installing, the torsion spring 42 is pre-biased such that a predetermined torsion angle (for example, 15 degrees) is formed between the two legs of the torsion spring 42. The pre-biased position can be used as the initial position from which the torsion spring 42 starts twisting, as shown in Fig. 3A. In this case, the actuation end 20 is also in its initial position. As shown in Fig. 3B, at the initial position of the actuation end 20, the main shaft 32 rotates such that the eccentric wheel 34 arranged on the main shaft is placed in the maximum eccentric position, that is to say, the eccentric wheel 34 pushes the actuation end 20 to the maximum position thereof. At this point, the valve rod 94 of the valve 90 is pressed down, and the valve 90 is closed.

When the electric actuator is working, the motor 10 is powered on and then drives the main shaft 32 to rotate counter-clockwise, for example. As shown in Fig. 3A, the main shaft 32 drives both the eccentric wheel 34 and the eccentric mechanism 44 to rotate counter-clockwise, and the state shown in Figs. 3C and 3D is achieved when the actuation end 20 reaches the actuation position. As shown in Figs. 3C and 3D, under the driving of the motor 10, the main shaft 32 drives the eccentric wheel 34 to rotate. In this case, under the action of the reset spring 94 in the valve, the actuation end 20 always abuts against the outer rim of the eccentric wheel 34. When the eccentric wheel 34 is rotated to its minimum eccentric position, the actuation end 20 also rises to its actuation position, as shown in Fig. 3D. In this case, the valve 90 is in a fully open state, and the pipeline is passable. The main shaft 32 drives the reset mechanism 40 while driving the eccentric wheel 34. In particular, the rotation arm 444 rotates together with the main shaft 32, the retaining pin 446 at the distal end thereof then pushes the movable leg 422 of the torsion spring 42 to rotate counter-clockwise, thereby increasing the torsion angle of the torsion spring 42, and finally reaching the position shown in Fig. 3C.

As previously shown, the torque output from the torsion spring 42 is only related to the amount of the torsion angle thereof. In the case shown in Fig. 3C, the torsion spring torque T1 output from the torsion spring 42 is the product of the restoring force F1 by the torque arm R1 in Fig. 3C. The restoring force F1 acts on the distal end of the rotation arm 444, so that the restoring torque τ output at the main shaft 32 is the product of the restoring force F1 by the length L of the rotation arm 444. If the motor 10 has been running, the restoring torque τ can be overcame, so that the rotation arm 444 remains in the position shown in Fig. 3C, and the actuation end 20 remains in the position shown in Fig. 3D, i.e. the actuation position.

If a sudden power failure occurs, or the motor 10 stops working, the driving force on the main shaft 32 disappears, the torsion spring 42 begins to release the energy, and the movable leg 422 pushes the rotation arm 444 to rotate clockwise, and drives the main shaft 32 to rotate back to the position shown in Figs. 3A and 3B. In other words, the main shaft 32 rotates under the driving of the torsion spring 42, such that the actuation end 20 returns back to its initial position, and the valve is closed, as shown in Fig. 3A. In this case, the torsion spring torque T2 output from the torsion spring 42 is equal to the product of the restoring force F2 by the torque arm R2. The restoring torque τ acting on the main shaft by the torsion spring 42 then is the product of the restoring force F2 by the length L of the rotation arm.

For the non-eccentric torsion spring mechanism, the center of torsion is just the central of the restoring mechanism, i.e. the main shaft position. Therefore, in the non-eccentric mechanism, for the same position on the movable leg 422, the torque arm remains unchanged. For the eccentric mechanism 3C shown in Figs. 3A and 3C, thanks to the eccentric arrangement, the position where the movable leg 422 abuts against the retaining pin 446 changes with the torsion angle. In the actuation position, the distance between the position where the movable leg 422 abuts against the retaining pin 446 and the center of torsion 426 is R1. In the initial position, the distance between the position where the movable leg 422 abuts against the retaining pin 446 and the center of torsion 426 is R2. Obviously, R2 is less than R1. If it is considered that the torsion spring torques output from the torsion spring in the same torsion position are identical, the restoring force F1 in the eccentric mechanism is obviously less than the restoring force at the same position in the non-eccentric mechanism, whereas F2 is greater than the restoring force of the non-eccentric torsion spring in the initial position. That is to say, with an increase in the torsion angle, the restoring force applied to the eccentric mechanism by the torsion spring is smaller by an increased amount than the restoring force in the non-eccentric arrangement. Thus, by reducing the restoring force at a larger torsion angle and increasing the restoring force at a smaller angle, the change in the restoring torque as a function of the torsion angle of the torsion spring can be compensated, resulting in a substantially stable restoring torque.

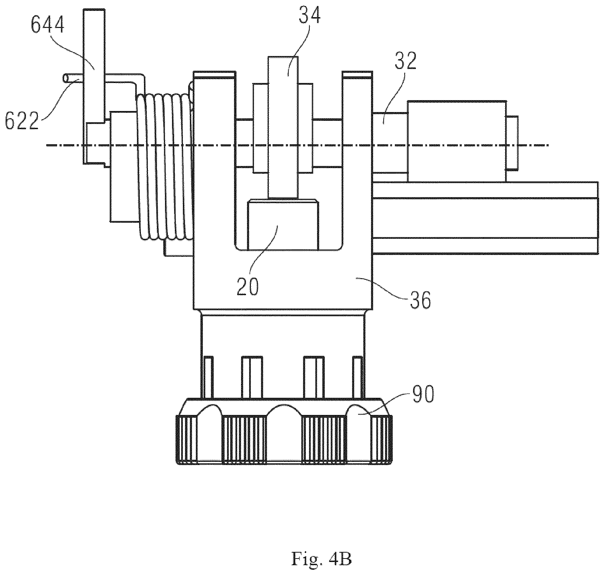

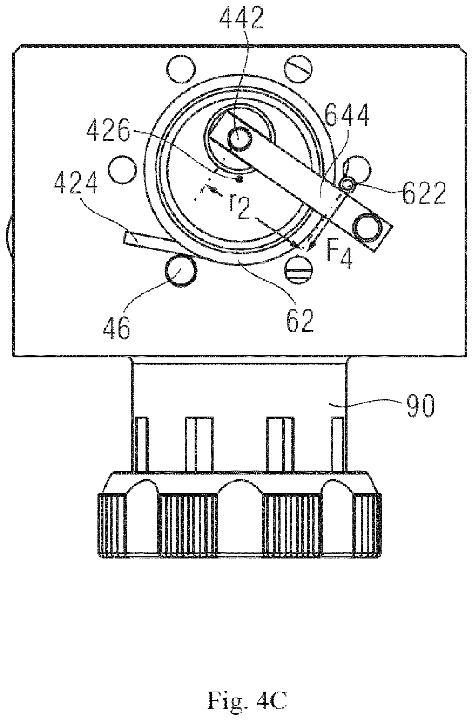

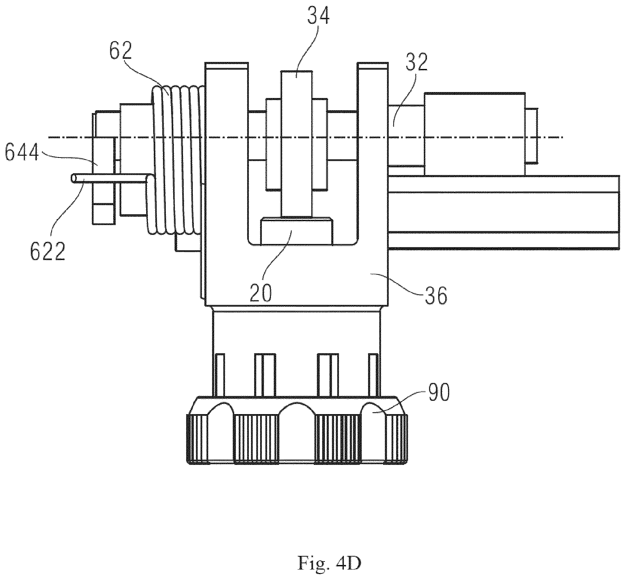

Figs. 4A-4D show an operation unit 200 having a reset mechanism according to another embodiment of the present invention, in which the eccentric mechanism can change the size of the torque arm r for forming the restoring torque. In particular, Figs. 4A and 4B respectively show the situation in which the actuation end 20 is situated in the initial position. Figs. 4C and 4D respectively show the situation in which the actuation end 20 is situated in the actuation position. In Figs. 4A-4D, the same components as those on the previous figures use the same reference numerals, and the functions and operation modes thereof are the same, which will be not repeatedly described herein. Different from Figs. 3A-3D, the movable leg 622 of the torsion spring 62 in Figs. 4A-4D is an axial leg, which protrudes along the axial direction of the torsion spring 62 and is overlapped with or abuts against the rotation arm 644 protruding in the plane where the torsion spring is located in the eccentric mechanism. The force arm of the movable leg 622 relative to the center of torsion of the torsion spring 62 during twisting always remains the same. However, the position where the torsion spring makes contact with the rotation arm 644 changes with the twisting of the torsion spring 62. Thus, the eccentric mechanism in Figs. 4A-4D can compensate for the change in the torsion spring output as a function of the torsion angle by changing the torque arm r of the restoring torque.

As shown in Figs. 4A and 4B, when the actuation end 20 is in the actuation position, the movable leg 622 exerts a restoring force F3 on the rotation arm 644, and the torque arm corresponding thereto is r1. The restoring torque τ output to the main shaft 32 is the product of F3 by r1. In this case, the motor 10 works properly to overcome the restoring torque τ and stabilize the actuation end 20 in its actuation position. After the motor 10 is powered off, the torsion spring 62 releases the energy to push the rotation arm 644 to the position as shown in Figs. 4C and 4D, and the actuation end 20 also returns to its initial position. As shown in Figs. 4C and 4D, the movable leg 622 exerts a restoring force F4 on the rotation arm 644, and the torque arm corresponding thereto is r2. The restoring torque τ output to the main shaft 32 is the product of F4 by r2. It can be seen from Figs. 4A and 4C that the restoring forces F3 and F4 output from the movable leg 622 are the same as the restoring forces of the non-eccentric mechanism in the equivalent positions. However, the torque arm r1 is significantly less than the torque arm r2. That is to say, the larger the torsion angle, the smaller the torque arm r for forming the restoring torque. Thus, by reducing the torque arm of the restoring torque at a larger torsion angle and increasing the torque arm at a smaller angle, the change in the restoring torque as a function of the torsion angle can be compensated, resulting in a substantially stable restoring torque.

The embodiments of the present invention are described above in conjunction with the accompanying drawings. In the above embodiments, the reset function can provide a resetting function when the motor stops working. In practical applications, when being powered on, the motor can provide both an actuation function and a resetting function. The eccentric torsion spring mechanism proposed in the present invention can provide the resetting function only in case of power failure.

It should be understood that, although the description is given according to each of the embodiments, but each embodiment does not only comprise an independent technical solution, this narration manner of the description is only for clarity, and for a person skilled in the art, the description shall be regarded as a whole, and the technical solution in each of the embodiments can also be properly combined to form other implementations that can be understood by a person skilled in the art.

The series of detailed descriptions set forth above is merely directed to specific descriptions of feasible embodiments of the present invention, they are not intended to limit the scope of protection of the present invention, which is defined in the appended claims.

## Claims

1. An electric actuator in a heating, ventilating and air conditioning system, comprising:
a motor (10);
an actuation end (20), which is driven by the motor (10) and is movable between an initial position and an actuation position; and
a reset mechanism (40) comprising a spring, which provides a restoring torque (τ) for driving said actuation end (20) to return to the initial position, and an eccentric mechanism (44, 644), **characterized in that** the spring of the reset mechanism (40) is a torsion spring (42, 62), which is capable of outputting a restoring force in proportion to a torsion angle when said motor (10) stops working; the eccentric mechanism (44, 644), is driven to rotate by the restoring force of said torsion spring (42, 62) and outputs said restoring torque (τ), wherein a center of rotation (442) of said eccentric mechanism (44, 644) is arranged to deviate from a center of torsion of said torsion spring (42, 62) in such a way that:
with an increase in the torsion angle, the restoring force (F1, F2) applied to said eccentric mechanism by said torsion spring (42) is smaller by an increased amount than a restoring force output by the torsion spring in a non-eccentric arrangement, or,
with an increase in the torsion angle, a torque arm (r) corresponding to the restoring force (F3, F4) applied to said eccentric mechanism by said torsion spring (62) becomes smaller.

2. The electric actuator of claim 1, further comprising a transmission mechanism (30) comprising:
a main shaft (32), with one end connected to said motor (10) and the other end of the main shaft fixedly connected to the center of rotation (442) of said eccentric mechanism (44); and
a transmission component (34), which is capable of converting the rotation of said main shaft (32) into a driving force for driving the action of said actuation end (20);
**characterized in that** said eccentric mechanism (44) interacts with said torsion spring (42).

3. The electric actuator of claim 1 or 2, **characterized in that**,
said torsion spring (42) has a movable leg (422), which protrudes in a radial direction of said torsion spring (42); and
said eccentric mechanism (44) comprises a rotation arm (444), with one end fixedly connected to said center of rotation (442) and the other end of the rotation arm provided with a retaining pin (446), said retaining pin and the movable leg (422) of said torsion spring (42) abutting against each other.

4. The electric actuator of claim 1 or 2, **characterized in that**,
said torsion spring (62) has a movable leg (622), which protrudes in an axial direction of said torsion spring (62); and
said eccentric mechanism comprises a rotation arm (644) with one end fixedly connected to said center of rotation, said movable leg (622) and said rotation arm (644) abutting against each other.

5. The electric actuator of any one of claims 2-4, **characterized in that**,
said transmission component (34) is an eccentric wheel arranged around said main shaft (32), and when said eccentric wheel rotates along with said main shaft (32), a rim of said eccentric wheel abuts against said actuation end (20).

6. The electric actuator of any one of claims 2-5, **characterized in that** said main shaft (32) is supported by a bracket (36), said torsion spring (42, 62) is supported by said bracket (36), and said torsion spring (42, 62) has a fixed leg (424) which is able to be fixed to said bracket.

7. The electric actuator of claim 6, **characterized in that** a pin hole and a stop pin (46), which is adapted to be inserted into the pin hole, are provided on said bracket (36), and the rotation of said fixed leg (424) is limited by said stop pin.

## Patentansprüche

1. Elektrischer Stellantrieb in einem Heizungs-, Lüftungs- und Klimasystem, umfassend:
- einen Motor (10);
- ein Stellende (20), das vom Motor (10) angetrieben wird und zwischen einer Ausgangsposition und einer Betätigungsposition bewegbar ist; und
- einen Rückstellmechanismus (40), umfassend eine Feder, die ein Rückstelldrehmoment (τ) bereitstellt, um das Stellende (20) so anzutreiben, dass es in die Ausgangsposition zurückkehrt, und einen exzentrischen Mechanismus (44, 644),
**dadurch gekennzeichnet, dass**
- die Feder des Rückstellmechanismus (40) eine Torsionsfeder (42, 62) ist, die in der Lage ist, eine Rückstellkraft proportional zu einem Verdrehwinkel auszugeben, wenn der Motor (10) zu arbeiten aufhört;
- der exzentrische Mechanismus (44, 644) von der Rückstellkraft der Torsionsfeder (42, 62) drehend angetrieben wird und das Rückstelldrehmoment (τ) ausgibt,
- wobei ein Drehzentrum (442) des exzentrischen Mechanismus (44, 644) so angeordnet ist, dass es von einem Verdrehzentrum der Torsionsfeder (42, 62) dergestalt abweicht, dass:
- mit einer Erhöhung des Verdrehwinkels die von der Torsionsfeder (42) an den exzentrischen Mechanismus angelegte Rückstellkraft (F1, F2) um einen erhöhten Betrag kleiner ist als eine von der Torsionsfeder in einer nichtexzentrischen Anordnung ausgegebene Rückstellkraft oder
- mit einer Erhöhung des Verdrehwinkels ein Drehmomentarm (r), welcher der von der Torsionsfeder (62) an den exzentrischen Mechanismus angelegten Rückstellkraft (F3, F4) entspricht, kleiner wird.

2. Elektrischer Stellantrieb nach Anspruch 1, ferner umfassend:
einen Getriebemechanismus (30), welcher umfasst:
- eine Hauptwelle (32), wobei das eine Ende mit dem Motor (10) verbunden ist und das andere Ende der Hauptwelle fest mit dem Drehzentrum (442) des exzentrischen Mechanismus (44) verbunden ist; und
- eine Getriebekomponente (34), die in der Lage ist, die Drehung der Hauptwelle (32) in eine Antriebskraft zum Antreiben der Wirkung des Stellendes (20) umzuwandeln;
**dadurch gekennzeichnet, dass** der exzentrische Mechanismus (44) mit der Torsionsfeder (42) zusammenwirkt.

3. Elektrischer Stellantrieb nach Anspruch 1 oder 2, **dadurch gekennzeichnet, dass**
- die Torsionsfeder (42) einen beweglichen Schenkel (422) aufweist, der in einer radialen Richtung der Torsionsfeder (42) vorspringt; und
- der exzentrische Mechanismus (44) einen Dreharm (444) umfasst, wobei das eine Ende fest mit dem Drehzentrum (442) verbunden ist und das andere Ende des Dreharms mit einem Sicherungsbolzen (446) versehen ist, wobei der Sicherungsbolzen und der bewegliche Schenkel (422) der Torsionsfeder (42) aneinander anstoßen.

4. Elektrischer Stellantrieb nach Anspruch 1 oder 2, **dadurch gekennzeichnet, dass**
- die Torsionsfeder (62) einen beweglichen Schenkel (622) aufweist, der in einer axialen Richtung der Torsionsfeder (62) vorspringt; und
- der exzentrische Mechanismus einen Dreharm (644) umfasst, dessen eines Ende fest mit dem Drehzentrum verbunden ist, wobei der bewegliche Schenkel (622) und der Dreharm (644) aneinander anstoßen.

5. Elektrischer Stellantrieb nach einem der Ansprüche 2 bis 4, **dadurch gekennzeichnet, dass** die Getriebekomponente (34) ein Exzenterrad ist, das um eine Hauptwelle (32) herum angeordnet ist, und, wenn das Exzenterrad sich gemeinsam mit der Hauptwelle (32) dreht, ein Rand des Exzenterrads am Stellende (20) anstößt.

6. Elektrischer Stellantrieb nach einem der Ansprüche 2 bis 5, **dadurch gekennzeichnet, dass** die Hauptwelle (32) durch eine Halterung (36) gestützt wird, die Torsionsfeder (42, 62) durch die Halterung (36) gestützt wird und die Torsionsfeder (42, 62) einen an der Halterung befestigbaren festen Schenkel (424) aufweist.

7. Elektrischer Stellantrieb nach Anspruch 6, **dadurch gekennzeichnet, dass** ein Bolzenloch und ein für das Einführen in das Bolzenloch eingerichteter Anschlagbolzen (46) an der Halterung (36) vorgesehen sind und die Drehung des festen Federschenkels (424) durch den Anschlagbolzen begrenzt wird.

## Revendications

1. Actionneur électrique dans un système de chauffage, de ventilation et de conditionnement d'air, comprenant:
un moteur (10);
une extrémité d'actionnement (20), laquelle est entraînée par le moteur (10) et peut être déplacée entre une position initiale et une position d'actionnement; et
un mécanisme de remise à zéro (40) comprenant un ressort,
qui procure un couple de rappel
(τ) pour entraîner ladite extrémité d'actionnement (20) à un retour vers la position initiale,
et un mécanisme excentrique (44, 644),
**caractérisé en ce que**
le ressort du mécanisme de remise à zéro (40) est un ressort de torsion (42, 62), lequel est capable de fournir une force de rappel proportionnelle à un angle de torsion quand ledit moteur (10) cesse de fonctionner; le mécanisme excentrique (44, 644) est entrainé à rotation par la force de rappel dudit ressort de torsion (42, 62) et fournit ledit couple de rappel (τ), dans lequel
le centre de rotation (442) dudit mécanisme excentrique (44, 644) est agencé pour dévier d'un centre de torsion dudit ressort de torsion (42, 62) d'une manière telle que:
avec une augmentation de l'angle de torsion, la force de rappel (F1, F2) appliquée audit mécanisme excentrique par ledit ressort de torsion (42) est plus petite d'une valeur accrue qu'une force de rappel fournie par le ressort de torsion dans un agencement non excentrique, ou
avec une augmentation de l'angle de torsion, un bras de couple (r) correspondant à la force de rappel (F3, F4) appliquée audit mécanisme excentrique par ledit ressort de torsion (62) devient plus petit.

2. Actionneur électrique selon la revendication 1, comprenant en outre un mécanisme de transmission (30) comprenant:
un arbre principal (32), une extrémité étant raccordée audit moteur (10) et l'autre extrémité de l'arbre principal étant raccordée fixe au centre de rotation (442) dudit mécanisme excentrique (44); et
un composant de transmission (34), lequel est capable de convertir la rotation dudit arbre principal (32) en force d'entraînement pour entraîner l'action de ladite extrémité d'actionnement (20);
**caractérisé en ce que**
ledit mécanisme excentrique (44) interagit avec ledit ressort de torsion (42).

3. Actionneur électrique selon la revendication 1 ou 2, **caractérisé en ce que**
ledit ressort de torsion (42) a une patte déplaçable (422) qui s'avance dans la direction radiale dudit ressort de torsion (42); et
ledit mécanisme excentrique (44) comprend un bras de rotation (444), dont une extrémité est raccordée fixe audit centre de rotation (442) et dont l'autre extrémité du bras de rotation est munie d'une butée de retenue (446), ladite butée de retenue et la patte déplaçable (422) dudit ressort de torsion (42) aboutant l'une contre l'autre.

4. Actionneur électrique selon la revendication 1 ou 2, **caractérisé en ce que**
ledit ressort de torsion (62) a une patte déplaçable (622) qui s'avance dans la direction axiale dudit ressort de torsion (62); et
ledit mécanisme excentrique comprend un bras de rotation (644) dont une extrémité est raccordée fixe audit centre de rotation, ladite patte déplaçable (622) et ledit bras de rotation (644) aboutant l'un contre l'autre.

5. Actionneur électrique selon l'une quelconque des revendications 2 à 4, **caractérisé en ce que**
ledit composant de transmission (34) est une roue excentrique agencée autour dudit arbre principal (32) et quand ladite roue excentrique tourne avec ledit arbre principal (32), un bord de ladite roue excentrique aboute contre ladite extrémité d'actionnement (20).

6. Actionneur électrique selon l'une quelconque des revendications 2 à 5, **caractérisé en ce que**
ledit arbre principal (32) est soutenu par un support (36), ledit ressort de torsion (42, 62) est soutenu par ledit support (36) et ledit ressort de torsion (42, 62) a une patte fixe (424) pouvant être fixée audit support.

7. Actionneur électrique selon la revendication 6, **caractérisé en ce que**
un trou de butée et une butée d'arrêt (46), propre à être insérée dans le trou de butée, sont prévus sur ledit support (36) et la rotation de ladite patte fixe (424) est limitée par ladite butée d'arrêt.
